(19) Europäisches Patentamt
European Patent Office
Office européen des brevets

(11) EP 4 332 062 A1

(12) EUROPEAN PATENT APPLICATION
published in accordance with Art. 153(4) EPC

(43) Date of publication:
**06.03.2024 Bulletin 2024/10**

(21) Application number: **22795906.1**

(22) Date of filing: **28.04.2022**

(51) International Patent Classification (IPC):
***C01B 33/32*** *(2006.01)* ***C07F 7/18*** *(2006.01)*
***H01M 4/36*** *(2006.01)* ***H01M 4/38*** *(2006.01)*
***H01M 4/58*** *(2010.01)* ***H01M 4/587*** *(2010.01)*

(52) Cooperative Patent Classification (CPC):
**C01B 33/32; C07F 7/18; H01M 4/36; H01M 4/38; H01M 4/58; H01M 4/587;** Y02E 60/10

(86) International application number:
**PCT/JP2022/019359**

(87) International publication number:
**WO 2022/230993 (03.11.2022 Gazette 2022/44)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **30.04.2021 JP 2021077644**

(71) Applicant: **Panasonic Intellectual Property Management Co., Ltd.**
**Kadoma-shi, Osaka 571-0057 (JP)**

(72) Inventors:
- **SHIBATA, Sho**
  **Kadoma-shi, Osaka 571-0057 (JP)**
- **SUZUKI, Hirotetsu**
  **Kadoma-shi, Osaka 571-0057 (JP)**
- **SAKATA, Motohiro**
  **Kadoma-shi, Osaka 571-0057 (JP)**

(74) Representative: **Novagraaf International SA**
**Chemin de l’Echo 3**
**1213 Onex, Geneva (CH)**

# (54) NEGATIVE ELECTRODE ACTIVE MATERIAL FOR NON-AQUEOUS ELECTROLYTE SECONDARY BATTERY, NON-AQUEOUS ELECTROLYTE SECONDARY BATTERY USING SAME, AND METHOD FOR PRODUCING NEGATIVE ELECTRODE ACTIVE MATERIAL FOR NON-AQUEOUS ELECTROLYTE SECONDARY BATTERY

(57) The disclosed negative electrode active material for a nonaqueous electrolyte secondary battery includes active material particles containing silicon, and a surface layer formed on surfaces of the active material particles. The surface layer contains a reaction product of a compound allowed to react so as to form a siloxane bond. The compound includes a structure represented by Si-R1-Si. The R1 is an atomic group having a chain portion including, as constituent elements, an alkylene group and at least one selected from the group consisting of a sulfur atom, an oxygen atom, and a nitrogen atom. The two Si’s are each bound with at least one atomic group selected from the group consisting of an alkoxy group having 1 to 6 carbon atoms, and the like.



Processed by Luminess, 75001 PARIS (FR)

## Description

[Technical Field]

The present disclosure relates to a negative electrode active material for a nonaqueous electrolyte secondary battery, a nonaqueous electrolyte secondary battery including the same, and a production method of a negative electrode active material for a nonaqueous electrolyte secondary battery.

[Background Art]

Silicon materials, such as silicon (Si) and silicon oxides represented by SiOx, are known to be able to absorb a large amount of lithium ions per unit volume as compared to carbon materials, such as graphite, and the application thereof to a negative electrode for a lithium ion battery and other batteries has been examined. In a nonaqueous electrolyte secondary battery in which a silicon material is used as a negative electrode active material, however, the charge-discharge efficiency is low as compared to when graphite is used as a negative electrode active material. Therefore, in order to improve the charge-discharge efficiency, it has been proposed to use a lithium silicate as a negative electrode active material.

Patent Literature 1 (Japanese Laid-Open Patent Publication No. 2003-160328) discloses "a lithium-containing silicon oxide powder which is represented by a general formula $SiLi_xO_y$ where x and y satisfy $0 < x < 1.0$ and $0 < y < 1.5$, and in which lithium is fused and partially crystallized".

Patent Literature 2 (Japanese Laid-Open Patent Publication No. 2014-150068) discloses "a prescribed negative electrode active material for a nonaqueous electrolyte secondary battery obtained by a method including a step of surface-treating a silicon-containing substance having a surface water content per unit specific surface area (200 to 300 °C) of 0.1 to 20 ppm/($m^2$/g), with a silane coupling agent".

Non-Patent Literature 1 reports that, by adding a vinyl group-containing silane coupling agent to a liquid electrolyte of a monopolar battery in which a Si/C composite is used, the capacity retention rate in charge-discharge cycling can be improved.

[Citation List]

[Patent Literature]

Patent Literature 1: Japanese Laid-Open Patent Publication No. 2003-160328
Patent Literature 2: Japanese Laid-Open Patent Publication No. 2014-150068

[Non-Patent Literature]

Non-Patent Literature 1: Ionics, 2018, 24, 3691-3698

[Summary of Invention]

[Technical Problem]

With respect to nonaqueous electrolyte secondary batteries, it has been required to further suppress the decrease in discharge capacity after repeated charge-discharge cycles. Under such circumstances, one object of the present disclosure is to provide a negative electrode active material that can constitute a nonaqueous electrolyte secondary battery excellent in capacity retention rate in charge-discharge cycling.

[Solution to Problem]

One aspect of the present disclosure relates to a negative electrode active material for a nonaqueous electrolyte secondary battery. The negative electrode active material includes: active material particles containing silicon; and a surface layer formed on surfaces of the active material particles, wherein the surface layer contains a reaction product of a compound allowed to react so as to form a siloxane bond, the compound includes a structure represented by Si-R1-Si, the R1 is an atomic group having a chain portion including, as constituent elements, an alkylene group and at least one selected from the group consisting of a sulfur atom, an oxygen atom, and a nitrogen atom, one of the two Si's

is bound with at least one atomic group selected from the group consisting of an alkoxy group having 1 to 6 carbon atoms, a group including an oxyalkylene group and represented by $-O-(C_{x1}H_{2x1+1}O_{y1})$ where x1 is an integer of 2 to 6, and y1 is an integer of 1 to 3, a chloro group, and a hydroxyl group, and the other one of the two Si's is bound with at least one atomic group selected from the group consisting of an alkoxy group having 1 to 6 carbon atoms, a group including an oxyalkylene group and represented by $-O-(C_{x2}H_{2x2+1}O_{y2})$ where x2 is an integer of 2 to 6, and y2 is an integer of 1 to 3, a chloro group, and a hydroxyl group.

Another aspect of the present disclosure relates to a nonaqueous electrolyte secondary battery. The nonaqueous electrolyte secondary battery includes: a positive electrode; a negative electrode; and a nonaqueous electrolyte, wherein the negative electrode includes the negative electrode active material according to the present disclosure.

Another aspect of the present disclosure relates to a production method of a negative electrode active material for a nonaqueous electrolyte secondary battery. The production method includes: a first step of bringing a compound or a liquid in which the compound is dissolved, into contact with active material particles containing silicon; and a second step of allowing the compound to react so as to form a siloxane bond, while the compound or the liquid are in contact with the active material particles; wherein the compound includes a structure represented by Si-R1-Si, the R1 is an atomic group having a chain portion including, as constituent elements, an alkylene group and at least one selected from the group consisting of a sulfur atom, an oxygen atom, and a nitrogen atom, one of the two Si's is bound with at least one atomic group selected from the group consisting of an alkoxy group having 1 to 6 carbon atoms, a group including an oxyalkylene group and represented by $-O-(C_{x1}H_{2x1+1}O_{y1})$ where x1 is an integer of 2 to 6, and y1 is an integer of 1 to 3, a chloro group, and a hydroxyl group, and the other one of the two Si's is bound with at least one atomic group selected from the group consisting of an alkoxy group having 1 to 6 carbon atoms, a group including an oxyalkylene group and represented by $-O-(C_{x2}H_{2x2+1}O_{y2})$ where x2 is an integer of 2 to 6, and y2 is an integer of 1 to 3, a chloro group, and a hydroxyl group.

[Advantageous Effects of Invention]

According to the present disclosure, it is possible to obtain a negative electrode active material that can constitute a nonaqueous electrolyte secondary battery excellent in capacity retention rate in charge-discharge cycling. Furthermore, according to the present disclosure, it is possible to obtain a nonaqueous electrolyte secondary battery including the above negative electrode active material.

While the novel features of the invention are set forth particularly in the appended claims, the invention, both as to organization and content, will be better understood and appreciated, along with other objects and features thereof, from the following detailed description taken in conjunction with the drawings.

[Brief Description of Drawings]

[FIG. 1] A partially cut-away schematic view illustrating a structure of a nonaqueous electrolyte secondary battery according to an embodiment of the present invention.

[FIG. 2] A cross-sectional view of the nonaqueous secondary battery of FIG. 1, taken along the line X-X'.

[Description of Embodiments]

In the following, embodiments according to the present disclosure will be described by way of examples, but the present disclosure is not limited to the examples described below. In the present specification, the phrase "a numerical value A to a numerical value B" means to include the numerical value A and the numerical value B, and can be rephrased as "a numerical value A or more and a numerical value B or less." In the following description, when the lower and upper limits of numerical values related to specific physical properties, conditions, etc. are mentioned as examples, any one of the mentioned lower limits and any one of the mentioned upper limits can be combined in any combination as long as the lower limit is not equal to or not more than the upper limit.

(Negative electrode active material for nonaqueous electrolyte secondary battery)

A negative electrode active material for a nonaqueous electrolyte secondary battery according to the present disclosure includes active material particles containing silicon, and a surface layer formed on surfaces of the active material particles. The above negative electrode active material and the above surface layer are hereinafter sometimes referred to as a "negative electrode active material (N)" and a "surface layer (L)". The surface layer (L) contains a reaction product of a predetermined compound allowed to react so as to form a siloxane bond. The compound is hereinafter

sometimes referred to as a "compound (1)". The compound (1) includes a structure represented by Si-R1-Si. The R1 is an atomic group having a chain portion including, as constituent elements, an alkylene group and at least one selected from the group consisting of a sulfur atom, an oxygen atom, and a nitrogen atom. One of the two Si's is bound with at least one atomic group selected from the group consisting of an alkoxy group having 1 to 6 carbon atoms, a group including an oxyalkylene group and represented by $-O-(C_{x1}H_{2x1+1}O_{y1})$ where x1 is an integer of 2 to 6, and y1 is an integer of 1 to 3, a chloro group, and a hydroxyl group. The other one of the two Si's is bound with at least one atomic group selected from the group consisting of an alkoxy group having 1 to 6 carbon atoms, a group including an oxyalkylene group and represented by $-O-(C_{x2}H_{2x2+1}O_{y2})$ where x2 is an integer of 2 to 6, and y2 is an integer of 1 to 3, a chloro group, and a hydroxyl group.

The oxyalkylene group is a group represented by $-O-C_xH_{2x}-$. In the case of the group including an oxyalkylene group and represented by $-O-(C_{x1}H_{2x1+1}O_{y1})$ and the group including an oxyalkylene group and represented by $-0-(C_{x2}H_{2x2+1}O_{y2})$, the oxygen atom of the oxyalkylene group is bound to Si. In the following, the group including an oxyalkylene group containing an oxygen atom bound to Si and represented by $-O-(C_xH_{2x+1}O_y)$ where x is an integer of 2 to 6, and y is an integer of 1 to 3 is sometimes referred to as an "oxyalkyl group". In all the oxyalkyl groups bound to Si of the compound (1), y (e.g., y1, y2, a later-described y6) may be 1 or 2. Examples of the oxyalkyl group include a group represented by $-OC_{x4}H_{2x4}-OC_{x5}H_{2x5+1}$ where x4 is an integer of 1 to 3, and x5 is an integer of 1 to 3, and specific examples thereof include $-OCH_2CH_2OCH_3$, etc.

The compound (1) may be a compound represented by the following formula (1).

[Chem. 1]

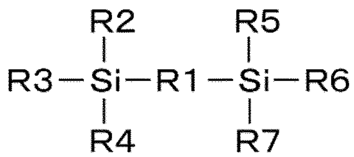

(1)

In the formula (1), at least one selected from the group consisting of R2, R3, and R4 is each independently an alkoxy group having 1 to 6 carbon atoms, a group including an oxyalkylene group and represented by $-O-(C_{x1}H_{2x1+1}O_{y1})$ where x1 is an integer of 2 to 6, and y1 is an integer of 1 to 3, a chloro group, or a hydroxyl group. At least one selected from the group consisting of R5, R6, and R7 is each independently an alkoxy group having 1 to 6 carbon atoms, a group including an oxyalkylene group and represented by $-O-(C_{x2}H_{2x2+1}O_{y2})$ where x2 is an integer of 2 to 6, and y2 is an integer of 1 to 3, a chloro group, or a hydroxyl group. The rest of R2 to R7 are each independently a hydrocarbon group having 1 to 6 carbon atoms, a hydrogen atom, or a group represented by $C_{x3}H_{2x3+y3+1}N_{y3}O_{z3}S_{w3}$ where x3 is an integer of 1 to 6, and y3 is an integer of 0 to 3, z3 is an integer of 0 to 3, w3 is an integer of 0 to 3, and $1 \leq y3 + z3 + w3$. R2 to R7 may be the same or different.

Examples of the hydrocarbon group having 1 to 6 carbon atoms include alkyl, alkenyl, and alkynyl groups having 1 to 6 carbon atoms. The group represented by $C_{x3}H_{2x3+y3+1}N_{y3}O_{z3}S_{w3}$ is neither an alkoxy group having 1 to 6 carbon atoms nor the aforementioned group represented by $-O-(C_{x1}H_{2x1+1}O_{y1})$. The symbols y3, Z3, and w3 may be each independently an integer of 0 to 2 or an integer of 0 or 1. The sum of y3, z3, and w3 may be in the range of 1 to 3 or in the range of 1 to 2. The sum of y3, z3, and w3 may be 1 or 2, and is, for example, 1. Examples of the group represented by $C_{x3}H_{2x3+y3+1}N_{y3}O_{z3}S_{w3}$ include a group represented by $C_{x3}H_{2x3+1}O_{y3}$, an alkylamino group having 1 to 6 carbon atoms, a mercaptoalkyl group having 1 to 6 carbon atoms, etc. The group represented by $C_{x3}H_{2x3+1}O_{y3}$ is bound to Si via, for example, a carbon atom. Examples of the group represented by $C_{x3}H_{2x3+1}O_{y3}$ include a hydroxyalkyl group. The rest of R2 to R7 may be each independently a hydrocarbon group having 1 to 6 carbon atoms, or a hydrogen atom.

In the compound (1), the alkoxy group having 1 to 6 carbon atoms and the aforementioned oxyalkylene group all together may be alternately read as "the group including an alkoxy group bound to Si or an oxyalkylene group bound to Si and represented by $-O-(C_{x6}H_{2x6+1}O_{y6})$ where x6 is an integer of 2 to 6, and y6 is an integer of 0 to 3". Alternatively, the alkoxy group having 1 to 6 carbon atoms and the aforementioned oxyalkylene group all together may be alternately read as "the group containing an alkoxy group and having 1 to 6 carbon atoms".

In a different point of view, the surface layer formed on the surfaces of the active material particles contains a reaction product of a compound (0) allowed to react so as to form a siloxane bond. The compound (0) is a compound containing two silicon atoms bound with an atomic group which can form a siloxane bond through reaction, and R1 connecting the two silicon atoms. The number of the atomic groups bound to one silicon atom is in the range of 1 to 3, preferably 2, more preferably 3. Examples of the atomic group which can form a siloxane bond through reaction include alkoxy, hydroxyl, and chloro groups, the aforementioned oxyalkyl group, etc. In the following, the alkoxy, hydroxyl, and chloro groups having 1 to 6 carbon atoms and the aforementioned oxyalkyl group may be collectively referred to as an

"atomic group (G)". The reaction (e.g., hydrolysis-condensation reaction) to form a siloxane bond by subjecting a compound having an alkoxysilyl group to reaction is widely known. For the R1 in the compound (0), the R1 exemplified for the compound (1) can be adopted. Examples of the compound (0) include at least some of the examples of the compound (1).

For the compound (0) and the compound (1), commercially available compounds may be used. Alternatively, compounds synthesized by a known synthesis method may be used.

In a typical example of the compound (1), the chain of the chain portion in R1, which is the chain connecting two silicon atoms, is constituted of the carbon atom of the alkylene group and at least one atom selected from the group consisting of a sulfur atom, an oxygen atom, and a nitrogen atom.

In the negative electrode active material (N) according to the present disclosure, the surfaces of the active material particles are protected with a reaction product of the compound (1). At least part of the compound (1) forms a siloxane bond with silicon that is in the active material particles. In the compound (1), silyl groups forming a siloxane bond are linked via R1. Therefore, as a result of the two silyl groups forming a siloxane bond with the silicon in the active material particles, the surfaces of the active material particles are protected. Since the reaction product of the compound (1) contains the portion of R1, the reaction product can flexibly follow the expansion and contraction of the active material particles associated with charge and discharge, and thus the surface protection layer is hardly broken even when the active material particles repeatedly expand and contract due to charge-discharge cycling. Therefore, according to the present disclosure, the side reactions with the components in the liquid electrolyte on the surfaces of the active material particles can be suppressed. As a result, according to the present disclosure, it is possible to increase the capacity retention rate in charge-discharge cycling.

Among R2 to R7, the ones other than the aforementioned atomic groups (G) may be each independently the aforementioned group. Specifically, among R2 to R7, the ones other than the aforementioned atomic groups (G) may be each independently a hydrocarbon group having 1 to 6 carbon atoms, a hydrogen atom, or a group represented by the above formula $C_{x3}H_{2x3+y3+1}N_{y3}O_{z3}S_{w3}$.

The formula (1) preferably satisfies the following condition (V1) or (V2), and more preferably satisfies the following condition (V3) or (V4). The formula (1) may satisfy the following condition (V5) or (V6).

(V1) The number of carbon atoms contained in each of R2 to R7 is 4 or less.

(V2) At least two selected from the group consisting of R2, R3, and R4 are an alkoxy group having 1 to 4 carbon atoms, and at least two selected from the group consisting of R5, R6, and R7 is an alkoxy group having 1 to 4 carbon atoms. Among R2 to R7, the ones other than the alkoxy group having 1 to 4 carbon atoms are a hydrocarbon group having 1 to 6 carbon atoms (alkyl, alkenyl, or alkynyl group), or a hydrogen atom.

(V3) All of R2 to R7 are an alkoxy group having 1 to 4 carbon atoms (e.g., 1 to 3 carbon atoms).

(V4) All of R2 to R7 are each independently a methoxy group or an ethoxy group. The R2 to R7 may be a methoxy group or an ethoxy group. For example, all of R2 to R7 may be a methoxy group, or all of R2 to R7 may be an ethoxy group.

(V5) Conditions corresponding to the condition (V2), with all the phrases of "having 1 to 4 carbon atoms" replaced with "having 1 to 3 carbon atoms", are satisfied.

(V6) Conditions corresponding to the condition (V2), with all the phrases of "having 1 to 4 carbon atoms" replaced with "having 1 or 2 carbon atoms", are satisfied.

A preferred example of the formula (1) satisfies any one of the above conditions (V1) to (V6) and the following condition (W1). A preferred example of the formula (1) satisfies any one of the above conditions (V1) to (V6) and satisfies the following condition (W2) or (W3). In these cases, the formula (1) may additionally satisfy the following condition (W4) or (W5).

(W1) The R1 is an atomic group containing a chain portion constituted of: at least one selected from the group consisting of a sulfur atom, an oxygen atom, and a nitrogen atom; and an alkylene group.

(W2) The R1 includes a chain portion constituted of: at least one heteroatom selected from the group consisting of a sulfur atom, an oxygen atom, and a nitrogen atom; and two alkylene groups constituting the chain portion so as to sandwich the at least one heteroatom. The two alkylene groups have each independently 2 to 4 carbon atoms. The two alkylene groups may be directly bound to the heteroatom.

(W3) The R1 is any one of $-(CH_2)_pS_n(CH_2)_q-$ where $1 \le n \le 6$, $2 \le p \le 4$, and $2 \le q \le 4$, $-(CH_2)_pO(CH_2)_q-$ where $2 \le p \le 4$ and $2 \le q \le 4$, $-(CH_2)_pO(CH_2)_rO(CH_2)_q-$ where $2 \le p \le 4$, $2 \le q \le 4$, and $2 \le r \le 4$, and $-(CH_2)_pNH(CH_2)_q-$ where $2 \le p \le 4$ and $2 \le q \le 4$. In this case, p = q = 3 may be satisfied, and furthermore, r = 2 or 3 may be satisfied. Note that n, p, q, and r are each a natural number.

(W4) In the condition (W1) or (W2), the number of atoms constituting the chain section of the chain portion is 2 or more, 3 or more, 5 or more, or 6 or more, and 20 or less, 15 or less, or 10 or less. For example, the above number of atoms may be in the range of 3 to 20, in the range of 3 to 15, or in the range of 3 to 10. The lower limits of these ranges may be replaced with 5 or 6. Here, the number of atoms constituting the chain section of the chain portion refers to the number of only the atoms that constitute a chain connecting two silicon atoms. For example, in the case of an

alkylene group, the number of only the carbon atoms constituting the chain is counted.

(W5) In the condition (W1), (W2), or (W4), R1 is a straight chain having no branch.

The greater the number of the alkoxy groups in the formula (1), the more likely a three-dimensional network resulted from the reaction between the compounds (1) is to be formed. Part of this network is bound to the silicon present on the surfaces of the negative electrode active material particles. Even when the three-dimensional network is formed, due to the presence of the portion of R1 in the network, the formed network is considered to have high flexibility. The formation of a highly flexible three-dimensional network is considered to enable to achieve a higher effect.

When the R1 contains at least one heteroatom selected from the group consisting of a sulfur atom, an oxygen atom, and a nitrogen atom, depending on the ion coordinating property of the heteroatom, lithium ions are dissociated from the lithium salt into the liquid electrolyte, which is considered to promote lithium ion conduction in the surface layer. Thus, it is considered less likely to occur that the surface layer inhibits the transfer of lithium ions between the active material and the electrolyte during charge and discharge.

When the R1 contains a nitrogen atom, the R1 may include an amide bond. When the formula (1) satisfies the condition (W1), the compound (1) represented by the formula (1) may be a sulfide, an ether, or an amine.

The mass of the reaction product in the compound (1) contained in the surface layer may be in the range of 0.001% to 10% (e.g., in the range of 0.05% to 1%) of the mass of the active material particles. This percentage may be analyzed by ICP spectroscopy and the like.

The reaction product may have a chemical structure in which Si in the structure of Si-R1-Si is bound to Si in the active material particles via a siloxane bond. That is, the surface layer (L) may include a chemical structure in which Si in a plurality of Si-R1-Si structures are bound to Si in the active material particles, via a siloxane bond (a reaction product of the compound (1)). The reaction product may have a structure in which Si in a plurality of Si-R1-Si structures are bound to each other and to Si in the active material particles, via a siloxane bond. That is, the surface layer (L) may have a chemical structure (a reaction product of the compound (1)) in which Si in a plurality of Si-R1-Si structures are bound to each other and to Si in the active material particles, via a siloxane bond.

(Compound (1) in which chain portion of R1 contains sulfur)

In the compound (1) (e.g., the compound represented by the formula (1)), the chain portion of R1 may contain sulfur. For example, the compound (1) may be a bis(alkoxysilylalkyl)sulfide. An example of the compound (1) in which the chain portion of R1 contains sulfur will be described below. The R1 is a sulfide group represented by $C_{t1}H_{2t1}S_z$ where t1 and z are each an integer of 1 or more. At least one of R2 to R4 is at least one selected from the group consisting of an alkoxy group having 1 to 6 carbon atoms, the aforementioned alkyloxy group, a hydroxyl group, and a chloro group. At least one of R5 to R7 is at least one selected from the group consisting of an alkoxy group having 1 to 6 carbon atoms, the aforementioned alkyloxy group, a hydroxyl group, and a chloro group. The rest of R2 to R7 may be each independently one of the aforementioned groups. Specifically, among R2 to R7, the ones other than the aforementioned atomic groups (G) may be each independently a hydrocarbon group having 1 to 6 carbon atoms, a hydrogen atom, or a group represented by the above formula $C_{x3}H_{2x3+y3+1}N_{y3}O_{z3}S_{w3}$.

The atomic groups (G) contained in R2 to R4 and R5 to R7 can form an X-O-Si-R1 bond with the surface of a silicon element-containing material, and the surface of the silicon element-containing material may possibly be covered with a Si-R1-Si structure with stable siloxane bonds on both ends. That is, the surface of the silicon element-containing material is covered with a coating containing a bissilyl sulfide structure (a coating formed of a reaction product of the compound (1), which is hereinafter sometimes referred to as an "SSS coating").

In the formula (1), the sulfide group (R1) represented by $C_{t1}H_{2t1}S_z$ may have a structure represented by R11-$S_z$-R12. Here, R11 and R12 are each independently an alkylene group having 1 or more carbon atoms. Such R1 is considered to have excellent flexibility and exhibit high electron-shielding ability due to the $S_z$ structure, and thus to further increase the effect of suppressing side reactions.

The greater the numbers of carbon atoms in R11 and R12 are, the more excellent the flexibility is, which allows for easy reversible deformation of the SSS coating. However, when the numbers of carbon atoms in R11 and R12 are excessively increased, the alkylene chain becomes too long, the denseness of the SSS coating is reduced, and the effect of suppressing side reactions is considered to be reduced. Therefore, the numbers of carbon atoms in R11 and R12 are each preferably 1 to 6, more preferably 2 to 4. The bis(alkoxysilylalkyl)sulfide is desirably a bis(alkoxysilyl $C_{1-6}$ alkyl)sulfide and may be a bis(alkoxysilyl $C_{2-4}$ alkyl)sulfide.

In the $S_z$ group constituting R1, the greater the number of consecutive sulfur atoms is, the more excellent the flexibility is, which allows for easy reversible deformation of the SSS coating. However, when the number of sulfur atoms is excessively increased, the denseness of the SSS coating is reduced, and the $S_z$ group itself may cause a side reaction. Therefore, the number of sulfur atoms in the $S_z$ group is preferably 1 to 6, more preferably 2 to 4. That is, the bis(alkoxysilylalkyl)sulfide is desirably a bis(alkoxysilyl $C_{1-6}$ alkyl)$S_{1-6}$ sulfide, and may be a bis(alkoxysilyl $C_{2-4}$ alkyl)$S_{2-4}$ sulfide.

R2 to R7 are already described above, and their overlapping description will be omitted. In view of increasing

the reactivity with the surface of the silicon element-containing material, the number of carbon atoms in the alkoxy group may be in the range of 1 to 3, and the number of carbon atoms in the oxyalkyl group may be in the range of 2 to 3.

The rest of R2 to R7 may be the aforementioned groups. Specifically, among R2 to R7, the ones other than the aforementioned atomic groups (G) may be each independently a hydrocarbon group having 1 to 6 carbon atoms, a hydrogen atom, or a group represented by the above formula $C_{x3}H_{2x3+y3+1}N_{y3}O_{z3}S_{w3}$. In view of reducing the steric hindrance during reaction, the number of carbon atoms may be 1 to 3. R2 to R4 are each independent, all of R2 to R4 may have the same number or different numbers of carbon atoms, and two of R2 to R4 may have the same number of carbon atoms. Likewise, R5 to R7 are each independent, all of R5 to R7 may have the same number or different numbers of carbon atoms, and two of R5 to R7 may have the same number of carbon atoms.

The two alkoxysilyl groups (R2R3R4Si- or R5R6R7Si-) linked to R1 may be the same or different. However, in order to increase the symmetry of the structure of the SSS coating to achieve a more stable structure, the two alkoxysilyl groups linked to R1 may have the same structure.

Among bis(trialkoxysilyl $C_{1-6}$ alkyl)$S_{1-6}$ sulfides, easily available ones include at least one selected from the group consisting of bis(triethoxysilylpropyl)sulfide, bis(triethoxysilylpropyl)disulfide, bis(triethoxysilylpropyl)trisulfide, and bis(triethoxysilylpropyl)tetrasulfide. Bis(triethoxysilylpropyl)tetrasulfide (TESPT, also known as bis[3-(triethoxysilyl)propyl]tetrasulfide) is shown below. These may be commercially available products or may be synthesized by a known method.

[Chem. 2]

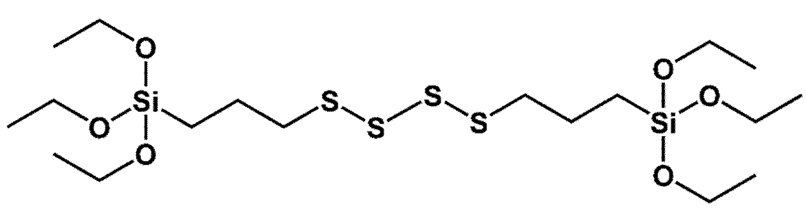

(Compound (1) in which chain portion of R1 contains nitrogen)

In the compound (1) (e.g., the compound represented by the formula (1)), the chain portion of R1 may contain nitrogen. For example, the compound (1) may be a bis(alkoxysilylalkyl)amine. The compound (1) in which the chain portion of R1 contains nitrogen may be a compound obtained by replacing the $S_z$ group with a secondary amino group (-NH-) or a tertiary amino group in the above description regarding the compound (1) in which the chain portion of R1 contains sulfur. When replaced with a tertiary amino group, examples of the side chain bound to the nitrogen atom include an alkyl group and an alkoxysilylalkyl group. An example of the bis(alkoxysilylalkyl)amine is shown below. These may be commercially available products or may be synthesized by a known method.

[Chem. 3]

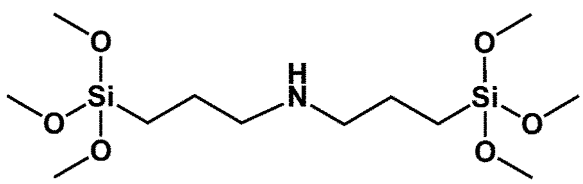

The amino group constituting R1 may have a structure represented by R11-N-R12. Here, R11 and R12 are each independently an alkylene group having 1 or more carbon atoms. Such R1 is considered to have excellent flexibility and exhibit high electron-shielding ability, and thus to further increase the effect of suppressing side reactions.

The greater the number of carbon atoms in the amino group, the more excellent the flexible is, which allows for easy reversible deformation of the coating formed of a reaction product of the compound (1). However, when the number of carbon atoms in the amino group is excessively increased, R1 becomes too long, the denseness of the coating is reduced, and the effect of suppressing side reactions is considered to be reduced. Therefore, the number of carbon atoms in the alkylene group is desirably 1 to 6, more desirably 2 to 4. For example, the bis(alkoxysilylalkyl)amine is desirably a bis(alkoxysilyl $C_{1-6}$ alkyl)amine and may be a bis(alkoxysilyl $C_{2-4}$ alkyl)amine.

(Compound (1) in which chain portion of R1 contains amide bond)

The compound (1) in which the chain portion of R1 has an amide bond may be a compound obtained by replacing the $S_z$ group with an amide group, in the above description regarding the compound (1) in which the chain portion of R1 contains sulfur.

(Compound (1) in which chain portion of R1 contains ether bond)

In the compound (1) (e.g., the compound represented by the formula (1)), the chain portion of R1 may contain an ether bond. The compound (1) in that case may be a compound obtained by replacing R1 with an ether bond-containing atomic group, in the above description regarding the compound (1) in which the chain portion of R1 contains sulfur.

When R1 in the compound (1) contains an ether bond, in the formula (1), R1 may have a structure represented by R11-(O-R12)$_n$-O-R13. Here, R11, R12, and R13 are each independently an alkylene group having 1 or more carbon atoms, and n is an integer of 0 or more. Such R1 has excellent flexibility, and the oxygen connecting R11 and R12 and the oxygen connecting R12 and R13 are coordinated to cations, which can facilitate the migration of cations into and out of the silicon element-containing material. Presumably because of this, the cation conductivity is increased, and the effect of suppressing the decrease in capacity retention rate is further enhanced. When n is 2 or more, the plurality of R12 contained in the (O-R12) units may all be the same alkylene group, or may contain alkylene groups with different carbon numbers.

The greater the numbers of carbon atoms in R11 and R13 are, the more excellent the flexibility is, which allows for easy reversible deformation of the coating formed from a reaction product of compound (1). However, when the number of carbon atoms in R11 and R13 are excessively increased, the alkylene chain becomes too long, the denseness of the coating is reduced, and the effect of suppressing side reactions is considered to be reduced. Therefore, the numbers of carbon atoms in R11 and R13 are each preferably 1 to 6, more preferably 2 to 4. The bis(alkoxysilylalkyl)ether is desirably a bis(alkoxysilyl $C_{1-6}$ alkyl)ether, and may be a bis(alkoxysilyl $C_{2-4}$ alkyl)ether.

The -O- group constituting R1 serves to enhance the cation conductivity and contributes to improving the capacity retention rate. However, when the number of -O-groups is excessively increased, and the denseness of the coating is reduced. Therefore, the number of -O- groups is desirably 1 to 5, more desirably 1 to 3. That is, the number n of the (O-R12) units included in the above R1 is desirably 0 to 4, more desirably 0 to 2.

On the other hand, the number of carbon atoms in R12 is preferably 4 or less, more preferably 2 or more and 4 or less, in view of facilitating the migration of cations between adjacent oxygen atoms.

R1 may be $-C_3H_6-O-C_3H_6-$ or $-C_2H_4-O-C_2H_4-O-C_3H_6-$. R2 to R7 may be each independently a methoxy group.

Specific examples of a desirable alkoxysilyl compound include bis(alkoxysilylalkyl)ethers represented by the following formulas.

[Chem. 4]

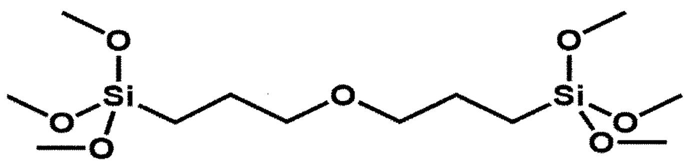

[Chem. 5]

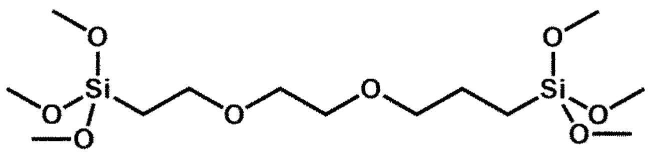

The surface layer (L) of the negative electrode active material (N) may contain a conductive carbon. In this case, the formula (1) preferably satisfies the above condition (V2) or (V5). A silicon-containing active material, due to its poor electrical conductivity, tends to cause a capacity decrease in charge-discharge cycling. By arranging a conductive carbon on the active material surface, the capacity decrease in charge-discharge cycling can be suppressed. However, by merely arranging a conductive carbon on the surface, the adhesion between the active material and the conductive

carbon is reduced due to expansion and contraction of the active material associated with charge-discharge cycles, and the conductivity therebetween is reduced. On the other hand, when the surface layer (L) contains a reaction product of the compound (1) and a conductive carbon, the charge-discharge efficiency of the silicon-containing negative electrode active material can be remarkably improved. This is possibly because the adhesion between the active material and the conductive carbon is maintained by the network formed by the reaction product of the compound (1).

As the conductive carbon, for example, amorphous carbon, graphite, graphitizable carbon (soft carbon), non-graphitizable carbon (hard carbon), and the like can be used. Among them, amorphous carbon is preferable in that a thin conductive layer covering the surfaces of the composite particles can be easily formed. Examples of the amorphous carbon includes carbon black, calcined pitch, coke, activated carbon, etc. Examples of the graphite includes natural graphite, artificial graphite, graphitized mesophase carbon, etc.

(Active material particles)

The active material particles contain silicon (silicon element). A material containing silicon is sometimes treated as a kind of alloy-type material. Here, the alloy-type material refers to a material containing an element capable of forming an alloy with lithium. Examples of the element capable of forming an alloy with lithium include silicon, tin, etc., among which silicon (Si) is promising. The active material particles may be produced by any method. The active material particles may be produced by a known method, or commercially available ones may be used.

The material containing silicon may be a silicon alloy, a silicon compound, and the like, and may be a composite material. In particular, a composite material including a lithium ion conductive phase and silicon particles dispersed in the lithium ion conductive phase is promising. As the lithium ion conductive phase, for example, a silicon oxide phase, a silicate phase, a carbon phase, and the like can be used. The silicon oxide phase is a material having relatively high irreversible capacity. On the other hand, the silicate phase is preferable because of its low irreversible capacity.

The major component (e.g., 95 to 100 mass%) of the silicon oxide phase may be silicon dioxide. The composition of a composite material including a silicon oxide phase and silicon particles dispersed therein can be expressed, as a whole, by $SiO_x$. The SiOx has a structure in which fine silicon particles are dispersed in amorphous $SiO_2$. The content x of oxygen relative to silicon is, for example, $0.5 \leq x < 2.0$, more preferably $0.8 \leq x \leq 1.5$.

The silicate phase may contain, for example, at least one selected from the group consisting of Group I and II elements in the long-form periodic table. Examples of the Group I and II elements in the long-form periodic table that can be used include lithium (Li), potassium (K), sodium (Na), magnesium (Mg), calcium (Ca), strontium (Sr), and barium (Ba). Other elements, such as aluminum (Al), boron (B), lanthanum (La), phosphorus (P), zirconium (Zr), and titanium (Ti), may be contained. In particular, a silicate phase containing lithium (hereinafter sometimes referred to as a lithium silicate phase) is preferable because of its small irreversible capacity and high initial charge-discharge efficiency.

The lithium silicate phase is an oxide phase containing lithium (Li), silicon (Si), and oxygen (O), and may contain other elements. The atomic ratio O/Si of O to Si in the lithium silicate phase is, for example, greater than 2 and less than 4. Preferably, the O/Si is greater than 2 and less than 3. The atomic ratio Li/Si of Li to Si in the lithium silicate phase is, for example, greater than 0 and less than 4. The lithium silicate phase can have a composition represented by a formula: $Li_{2z}SiO_{2+z}$ where $0 < z < 2$. The symbol z preferably satisfies $0 < z < 1$, more preferably $z = 1/2$. Examples of the elements other than Li, Si and O that can be contained in the lithium silicate phase include iron (Fe), chromium (Cr), nickel (Ni), manganese (Mn), copper (Cu), molybdenum (Mo), zinc (Zn), and aluminum (Al).

The carbon phase can be composed of, for example, shapeless carbon with low crystallinity (i.e., amorphous carbon). The shapeless carbon may be, for example, hard carbon, soft carbon, or others.

Each of the active material particles (N) and the negative electrode mixture layer may contain, in addition to the silicon element-containing material, a material that electrochemically absorbs and releases lithium ions, lithium metal, a lithium alloy, and the like. As the material that electrochemically absorbs and releases lithium ions, a carbon material is preferred. Examples of the carbon material include graphite, graphitizable carbon (soft carbon), non-graphitizable carbon (hard carbon), etc. Preferred among them is graphite that is excellent in stability during charge and discharge and has low irreversible capacity.

The active material particles may be composite particles containing a lithium silicate phase represented by $Li_xSiO_y$ where $0 < x \leq 4$ and $0 < y \leq 4$, and a silicon phase dispersed in the lithium silicate phase. Note that x and y are irrelevant to the x and y related to the compound (1). Such composite particles may be produced by, for example, a method described later in Examples, or may be produced by a known method. The crystallite size of the silicon phase may be in the range of 1 nm to 1000 nm (e.g., in the range of 200 nm to 500 nm).

The crystallite size of the silicon phase is calculated using the Scherrer formula from the half width of a diffraction peak attributed to the (111) plane of the silicon phase (elementary Si) in an X-ray diffraction pattern.

The active material particles may be composite particles containing a carbon phase and a silicon phase dispersed in the carbon phase. The carbon phase can be constituted of, for example, shapeless carbon (i.e., amorphous carbon). The shapeless carbon may be, for example, hard carbon, soft carbon, or others. The shapeless carbon (amorphous carbon), in general, refers to a carbon material having an average interplanar spacing d002 of the (002) plane as measured by an X-ray diffractometry of exceeding 0.34 nm.

(Production method of negative electrode active material (N))

The production method according to the present disclosure is a method for producing a negative electrode active material (N) for a nonaqueous electrolyte secondary battery according to the present disclosure. The negative electrode active material (N) may be produced by a method other than the method described below. Since the matters described about the negative electrode active material (N) can be applied to the production method below, overlapping description may be omitted in some cases. The matters described below about the production method may be applied to the negative electrode active material according to the present disclosure.

The production method includes a first step and a second step in this order. The first and second steps are performed under the conditions that the compound (1) forms a siloxane bond. The first and second steps may be performed under the conditions similar to those that a known silane coupling agent containing an alkoxysilyl group is hydrolyzed and condensed so as to form a siloxane bond.

(First step)

The first step is a step of bringing the compound (1) or a liquid in which the compound (1) is dissolved, into contact with active material particles containing silicon. The liquid is hereinafter sometimes referred to as a "liquid (S)". The first step may be a step of dispersing silicon-containing active material particles in the compound (1) or the liquid (S). Alternatively, the first step may be a step of applying the compound (1) or the liquid (S) onto the surfaces of the silicon-containing active material particles.

The compound (1) is the aforementioned compound and represented by the formula (1). The active material particles are the aforementioned active material particles. The liquid (S) can be prepared by dissolving the compound (1) in a solvent. Here, before the second step is performed, part of the compound (1) may have been reacted so as to form a siloxane bond. The solvents may include a lower alcohol (e.g., ethanol), water, and an acid. Examples of the acid include hydrochloric acid and the like.

The content of the reaction product of the compound (1) in the negative electrode active material (N) can be changed by changing the concentration of the compound (1) in the liquid (S). The concentration of the compound (1) in the liquid (S) may be in the range of 0.0001 to 10 mol/liter (e.g., in the range of 0.001 to 0.1 mol/liter). The mass of the compound (1) per 1 g mass of the active material particles dispersed in the liquid (S) may be in the range of 0.0001 to 1 g (e.g., in the range of 0.001 to 0.1 g).

(Second step)

The second step is a step of allowing the compound (1) to react so as to form a siloxane bond while the compound (1) or the liquid (S) is in contact with the active material particles. The second step may be performed by, for example, holding the liquid (S) and the active material particles at a temperature elevated to a predetermined temperature, for a predetermined time. When the active material particles are dispersed in the liquid (S), the liquid (S) may be stirred in the second step. The predetermined temperature may be in the range of 10 to 200 °C (e.g., in the range of 40 to 100 °C). The predetermined time may be in the range of 1 to 120 hours (e.g., in the range of 12 to 72 hours).

A negative electrode active material (N) is obtained in the second step. The negative electrode active material (N) obtained in the second step may be washed and/or dried, as necessary.

The production method according to the present disclosure includes a step (a) of placing a conductive carbon on the surfaces of the active material particles before the first step, or between the first step and the second step, or after the second step. By performing the step (a), a surface layer (L) containing a reaction product of the compound (1) and a conductive carbon can be formed.

The step (a) may be performed by heat-treating a mixture of the active material particles and the conductive carbon. As the raw material of the conductive carbon, for example, coal or coal tar pitch, petroleum pitch, phenol resin, and the like can be used. The heat treatment may be performed by, for example, heating at a temperature of 450 to 1000 °C for 1 to 10 hours. As the conductive carbon, the aforementioned conductive carbon can be used. Alternatively, in the step (a), using a gas phase method such as a CVD method, a conductive carbon layer may be formed by allowing a hydrocarbon gas to react on the surfaces of the composite particles. As the hydrocarbon gas, acetylene, methane, and the like can be used. According to these methods, it is possible to form a conductive layer into which the reaction product of the compound (1) can permeate.

(Negative electrode for nonaqueous electrolyte secondary battery)

The present disclosure provides a negative electrode for nonaqueous electrolyte secondary batteries. The negative electrode includes the negative electrode active material (N) according to the present disclosure.

(Nonaqueous electrolyte secondary battery)

A nonaqueous electrolyte secondary battery according to the present disclosure includes a positive electrode, a negative electrode, and a nonaqueous electrolyte. The negative electrode includes the negative electrode active material (N). There is no particular limitation on the configuration other than that of the negative electrode, and a known configuration used for nonaqueous electrolyte secondary batteries may be adopted. Except for containing the negative electrode active material (N), the configuration of the negative electrode is not particularly limited. For the components of the negative electrode other than the negative electrode active material (N), known components of the negative electrode for nonaqueous electrolyte secondary batteries may be adopted. An example of a negative electrode according to the present disclosure includes a negative electrode current collector and a negative electrode mixture layer disposed on a surface of the negative electrode current collector. Except for using the negative electrode active material (N), the method for producing the nonaqueous electrolyte secondary battery according to the present disclosure is not limited, and a known production method may be adopted.

An example of the configuration of the nonaqueous electrolyte secondary battery according to the present disclosure will be described below. It is to be noted, however, that except for using the negative electrode active material (N), the configuration of the nonaqueous electrolyte secondary battery is not limited to the following configuration.

(Negative electrode)

The negative electrode includes, for example, a negative electrode current collector and a negative electrode mixture layer formed on a surface of the negative electrode current collector. The negative electrode mixture layer contains a negative electrode active material (N) as an essential component, and may contain optional components, such as a binder, a conductive material, and a thickener. The negative electrode mixture layer may contain, in addition to the negative electrode active material (N), an active material for a negative electrode other than the negative electrode active material (N). For the optional components, such as the binder, the conductive material, and the thickener, known materials can be used.

The negative electrode mixture layer can be formed by, for example, applying a negative electrode slurry in which a negative electrode mixture containing a negative electrode active material (N) and a predetermined optional component is dispersed in a dispersion medium, onto a surface of the negative electrode current collector, and drying the slurry. The applied film after drying may be rolled, as necessary. The negative electrode mixture layer may be formed on one surface or both surfaces of the negative electrode current collector.

For the negative electrode current collector, for example, a metal sheet or metal foil is used. Examples of the material of the negative electrode current collector include stainless steel, nickel, a nickel alloy, copper, a copper alloy, etc.

(Positive electrode)

The positive electrode includes, for example, a positive electrode current collector and a positive electrode mixture layer formed on a surface of the positive electrode current collector. The positive electrode mixture layer contains a positive electrode active material as an essential component, and may contain optional components, such as a binder, a conductive material, and a thickener. For the optional components, such as the binder, the conductive material, and the thickener, known materials can be used.

The positive electrode mixture layer can be formed by, for example, applying a positive electrode slurry in which a positive electrode mixture containing a positive electrode active material and a predetermined optional component is dispersed in a dispersion medium, onto a surface of the positive electrode current collector, followed by drying. The applied film after drying may be rolled, as necessary. The positive electrode mixture layer may be formed on one surface or both surfaces of the positive electrode current collector.

As the positive electrode active material, for example, a lithium-containing composite oxide can be used. Examples thereof include $Li_aCoO_2$, $Li_aNiO_2$, $Li_aMnO_2$, $Li_aCo_bNi_{1-b}O_2$, $Li_aCo_bMe_{1-b}O_c$, $Li_aNi_{1-b}Me_bO_c$, $Li_aMn_2O_4$, $Li_aMn_{2-b}Me_bO_4$, $LiMePO_4$, and $Li_2MePO_4F$ where Me is at least one selected from the group consisting of Na, Mg, Sc, Y, Mn, Fe, Co, Ni, Cu, Zn, Al, Cr, Pb, Sb, and B. Here, a = 0 to 1.2, b = 0 to 0.9, and c = 2.0 to 2.3. Note that the value a, which indicates the molar ratio of lithium, increases or decreases during charging and discharging.

Preferred among them is a lithium-nickel composite oxide represented by $Li_aNi_bMe_{1-b}O_2$ where Me is at least one selected from the group consisting of Mn, Co and Al, $0 < a \leq 1.2$, and $0.3 \leq b \leq 1$. In view of achieving a high capacity,

$0.85 \leq b < 1$ is more preferable. In view of the stability of the crystal structure, more preferred is $Li_aNi_bCo_cAl_dO_2$ containing Co and Al as elements represented by Me where $0 < a < 1.2$, $0.85 \leq b < 1$, $0 < c < 0.15$, $0 < d \leq 0.1$, and $b + c + d = 1$.

The positive electrode active material (especially, a lithium-containing composite oxide) usually has a form of secondary particles in which primary particles are aggregated together. The average particle diameter of the positive electrode active material may be, for example, 2 μm or more and 20 μm or less. Here, the average particle diameter refers to a median diameter at 50% cumulative volume in a volume-based particle size distribution. The volume-based particle size distribution can be measured with a laser diffraction particle size distribution analyzer.

For the positive electrode current collector, for example, a metal sheet or metal foil is used. Examples of the material of the positive electrode current collector include stainless steel, aluminum, an aluminum alloy, titanium, etc.

Examples of the conductive materials used in the positive electrode mixture layer and the negative electrode mixture layer include carbon materials, such as carbon black (CB), acetylene black (AB), Ketjen black (KB), carbon nanotubes (CNT), and graphite. These may be used singly, or in combination of two or more kinds thereof.

Examples of the binders used in the positive electrode mixture layer and the negative electrode mixture layer include fluorocarbon resins (polytetrafluoroethylene, polyvinylidene fluoride, etc.), polyacrylonitrile (PAN), polyimide resins, acrylic resins, polyolefin resins, etc. These may be used singly, or in combination of two or more kinds thereof.

(Separator)

A nonaqueous electrolyte secondary battery usually includes a separator disposed between the positive electrode and the negative electrode. The separator is excellent in ion permeability and has moderate mechanical strength and electrically insulating properties. As the separator, a microporous thin film, a woven fabric, a nonwoven fabric, and the like can be used. Examples of the material of the separator include polyolefins (polypropylene, polyethylene, etc.).

(Nonaqueous electrolyte)

A nonaqueous electrolyte (in other words, a nonaqueous liquid electrolyte) contains a nonaqueous solvent and a salt (solute) dissolved in the nonaqueous solvent. The salt (solute) is an electrolyte salt that ionically dissociates in the nonaqueous solvent. When the nonaqueous electrolyte is used in a lithium-ion secondary battery, the salt contains at least a lithium salt. The nonaqueous electrolyte may contain an additive other than the nonaqueous solvent and the salt. For example, the nonaqueous electrolyte may contain the compound (1) and/or a reaction product of the compound (1).

As the nonaqueous solvent, for example, a cyclic carbonic acid ester, a chain carbonic acid ester, a cyclic carboxylic acid ester, a chain carboxylic acid ester, and the like can be used. Examples of the cyclic carbonic acid ester include propylene carbonate (PC), ethylene carbonate (EC), vinylene carbonate (VC), etc. Examples of the chain carbonic acid ester include diethyl carbonate (DEC), ethyl methyl carbonate (EMC), dimethyl carbonate (DMC), etc. Examples of the cyclic carboxylic acid ester include γ-butyrolactone (GBL), γ-valerolactone (GVL), etc. Examples of the chain carboxylic acid ester include methyl acetate, ethyl acetate, propyl acetate, methyl propionate (MP), ethyl propionate (EP), etc. The nonaqueous solvent may be used singly or in combination of two or more kinds.

In particular, chain carboxylic acid esters are suited for preparing a nonaqueous liquid electrolyte with low viscosity. Therefore, the nonaqueous liquid electrolyte may contain 1% by mass or more and 90% by mass or less of a chain carboxylic acid ester. Among chain carboxylic acid esters, methyl acetate has a particularly low viscosity. Therefore, 90% by mass or more of the chain carboxylic acid ester may be methyl acetate.

Other examples of the nonaqueous solvent include cyclic ethers, chain ethers, nitriles such as acetonitrile, amides, such as dimethylformamide, etc.

Examples of the cyclic ether include 1,3-dioxolane, 4-methyl-1,3-dioxolane, tetrahydrofuran, 2-methyltetrahydrofuran, propylene oxide, 1,2-butylene oxide, 1,3-dioxane, 1,4-dioxane, 1,3,5-trioxane, furan, 2-methylfuran, 1,8-cineol, crown ether, etc.

Examples of the chain ether include 1,2-dimethoxyethane, dimethyl ether, diethyl ether, dipropyl ether, diisopropyl ether, dibutyl ether, dihexyl ether, ethyl vinyl ether, butyl vinyl ether, methyl phenyl ether, ethyl phenyl ether, butyl phenyl ether, pentyl phenyl ether, methoxytoluene, benzyl ethyl ether, diphenyl ether, dibenzyl ether, o-dimethoxybenzene, 1,2-diethoxyethane, 1,2-dibutoxyethane, diethylene glycol dimethyl ether, diethylene glycol diethyl ether, diethylene glycol dibutyl ether, 1,1-dimethoxymethane, 1,1-diethoxyethane, triethylene glycol dimethyl ether, tetraethylene glycol dimethyl ether, etc.

These solvents may be a fluorinated solvent in which one or more hydrogen atoms are substituted by fluorine atom. As the fluorinated solvent, fluoroethylene carbonate (FEC) may be used.

As the lithium salt, for example, a lithium salt of a chlorine-containing acid ($LiClO_4$, $LiAlCl_4$, $LiB_{10}Cl_{10}$, etc.), a lithium salt of a fluorine-containing acid ($LiPF_6$, $LiPF_2O_2$, $LiBF_4$, $LiSbF_6$, $LiAsF_6$, $LiCF_3SO_3$, $LiCF_3CO_2$, etc.), a lithium salt of a fluorine-containing acid imide ($LiN(FSO_2)_2$, $LiN(CF_3SO_2)_2$, $LiN(CF_3SO_2)(C_4F_9SO_2)$, $LiN(C_2F_5SO_2)_2$, etc.), a

lithium halide (LiCl, LiBr, LiI, etc.), and the like may be used. The lithium salt may be used singly or in combination of two or more kinds.

The concentration of the lithium salt in the nonaqueous liquid electrolyte may be 0.5 mol/liter or more and 2 mol/liter or less, and may be 1 mol/liter or more and 1.5 mol/liter or less. When the concentration of the lithium salt is controlled within the above range, a liquid electrolyte having excellent ionic conductivity and moderate viscosity can be obtained.

Examples of the additive include 1,3-propanesultone, methylbenzene sulfonate, cyclohexylbenzene, biphenyl, diphenyl ether, fluorobenzene, etc.

An example of the nonaqueous electrolyte secondary battery includes an outer body, and an electrode group and a nonaqueous electrolyte housed in the outer body. The electrode group may be a wound electrode group formed by winding a positive electrode and a negative electrode, with a separator interposed therebetween. The wound electrode group may be replaced with another form of an electrode group. For example, the electrode group may be a stacked electrode group formed by stacking a positive electrode and a negative electrode, with a separator interposed therebetween. The nonaqueous electrolyte secondary battery may be of any type, such as cylindrical, prismatic, coin, button, and sheet (laminate) types.

In the following, a nonaqueous electrolyte secondary battery according to an embodiment of the present invention will be described with reference to FIGS. 1 and 2. FIG. 1 is a partially cutaway plan view schematically illustrating an example of the structure of the nonaqueous electrolyte secondary battery. FIG. 2 is a cross-sectional view taken along the line X-X' of FIG 1.

As illustrated in FIGS. 1 and 2, a nonaqueous electrolyte secondary battery 100 is a sheet-type battery, and includes an electrode plate group 4 and an outer case 5 housing the electrode plate group 4.

The electrode plate group 4 has a structure in which a positive electrode 10, a separator 30 and a negative electrode 20 are stacked in this order. The positive electrode 10 and the negative electrode 20 are faced to each other, with the separator 30 interposed therebetween. Thus, the electrode plate group 4 is formed. The electrode group 4 is impregnated with nonaqueous electrolyte (not shown).

The positive electrode 10 includes a positive electrode active material layer 1a and a positive electrode current collector 1b. The positive electrode active material layer 1a is formed on a surface of the positive electrode current collector 1b.

The negative electrode 20 includes a negative electrode mixture layer 2a and a negative electrode current collector 2b. The negative electrode mixture layer 2a is formed on a surface of the negative electrode current collector 2b. The negative electrode mixture layer 2a contains the negative electrode active material (N) according to the present disclosure.

To the positive electrode current collector 1b and the negative electrode current collector 2b, a positive electrode tab lead 1c and a negative electrode tab lead 2c are connected, respectively. The positive electrode tab lead 1c and the negative electrode tab lead 2c are extended outside the outer case 5.

Between the positive electrode tab lead 1c and the outer case 5 and between the negative electrode tab lead 2c and the outer case 5, an insulating tab film 6 is placed to provide electrical insulation therebetween.

(Example of synthesis method of compound (1) in which chain portion of R1 contains oxygen)

An example of the compound (1) in which the chain portion of R1 contains oxygen may be synthesized by the following method. First, in a dry four-necked container (100 mL), 1.0 g of allyl ether, 40.0 mL of dichloroethane ($C_2H_4Cl_2$), 3.7 g of trimethoxysilane ($HSi(OMe)_3$), and 0.1 g of cyclooctadiene iridium chloride dimer ($[Ir(COD)Cl]_2$) were added and stirred, to allow the reaction represented by the following formula to proceed. The mixture was heated under stirring from room temperature to 50 °C, until the allyl ether as a raw material dissapeared. After confirming that the raw material had disappeared, heating and stirring was stopped. Next, the dichloroethane (solvent) was distilled off from the reaction liquid using an evaporator, to obtain a brown oil K1 (4.0 g) as a crude product containing an alkoxysilyl compound A.

[Chem. 6]

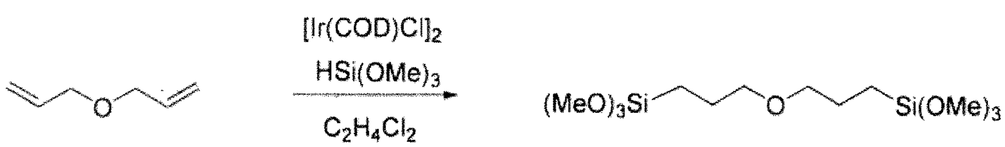


A

Subsequently, in a dry eggplant-shaped container (500 mL), 5.0 g of allyl ether, 200 mL of dichloroethane ($C_2H_4Cl_2$), 18.6 g of trimethoxysilane ($HSi(OMe)_3$), and 0.68 g of cyclooctadiene iridium chloride dimer ($[Ir(COD)Cl]_2$) were added, and the mixture was heated under stirring from room temperature to 50 °C. After confirming that the raw material had disappeared, heating and stirring was stopped. Next, the dichloroethane (solvent) was distilled off from the reaction liquid using a vacuum pump. To a crude product after distillation, the brown oil K1 was added, and purified by distillation at an oil bath temperature of 190 °C and a degree of vacuum of 0.1 to 0.01 mmHg, using a distillation purification apparatus equipped with a flask, a distilling head, a thermometer, a condenser tube, a vacuum pump, and a pressure gauge, to obtain a brown oil K2 (9.3 g) containing the alkoxysilyl compound A.

Furthermore, in a dry eggplant-shaped container (500 mL), 5.0 g of allyl ether, 200 mL of dichloroethane ($C_2H_4Cl_2$), 18.6 g of trimethoxysilane ($HSi(OMe)_3$), and 0.5 g of cyclooctadiene iridium chloride dimer ($[Ir(COD)Cl]_2$) were added, and the mixture was heated under stirring from room temperature to 50 °C. After confirming that the raw material had disappeared, heating and stirring was stopped. Next, the dichloroethane (solvent) was distilled off from the reaction liquid using a vacuum pump. To a crude product after distillation, the brown oil K2 was added, and the distillation purification was performed again at an oil bath temperature of 190 °C and a degree of vacuum of 0.1 to 0.01 mmHg, to obtain a colorless oil compound K3 (13.3 g, 38.8 mol, yield 34.6%) containing the alkoxysilyl compound A. The purity was checked by $^1$H-NMR and gas chromatography (GC).

(Another example of synthesis method of compound (1) in which chain portion of R1 contains oxygen)

Ethylene glycol monovinyl ether (5.0 g, 1.0 eq.), 50 mL of super-dehydrated dimethylformamide (DMF), and allyl bromide (7.55 g, 1.1 eq.) were added to a 200-mL reaction vessel at room temperature. To this solution, under stirring, NaH (2.27 g, 1.0 eq.) was slowly added in several time over 20 minutes, to obtain a white liquid suspension. The white liquid suspension was stirred at room temperature for 16 hours, allowing the reaction represented by the formula below to proceed. After stirring, water was added to quench the reaction, to obtain a reaction liquid containing a compound B.

[Chem. 7]

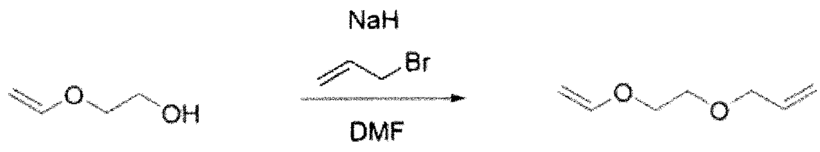


B

The reaction liquid was placed in a separatory funnel, and after 30 mL of diethyl ether was added thereto and stirred, then the organic phase was extracted, which process was repeated three times. The extracted organic phases were combined and placed in the separatory funnel again, and after 100 mL of water was added and stirred, the operation of draining the aqueous phase was repeated three times in total. Subsequently, after 100 mL of saturated saline was added and stirred, the aqueous phase was drained. Thereafter, 20 g of anhydrous sodium sulfate was added to the remaining organic phase, followed by stirring to remove water, and then, filtration was performed to remove the anhydrous sodium sulfate. Thereafter, the diethyl ether was removed at a bath temperature of 50 °C under ordinary pressure, and the residue was purified by distillation (degree of vacuum : 20 mmHg, oil bath temperature: 70 °C, vapor temperature: 50 °C), using a distillation purification apparatus equipped with a flask, a distilling head, a thermometer, a condenser tube, a vacuum pump, and a pressure gauge, to obtain a colorless liquid Y1 containing the compound B.

Subsequently, in a 50-mL reaction vessel, the compound B (1.0 g, 1.0 eq.), 30 mL of super-dehydrated dichloromethane, and cyclooctadiene iridium chloride dimer ($[Ir(COD)Cl]_2$) (52 g, 0.01 eq.) were added, to obtain an orange solution. To the orange solution, under stirring, trimethoxysilane ($HSi(OMe)_3$) (3.0 mL, 3.0 eq.) was slowly added dropwise over 15 minutes. The solution was stirred at room temperature for 2 hours to allow the reaction represented by the following formula to proceed, to obtain a solution Y2 containing an alkoxysilyl compound C.

[Chem. 8]

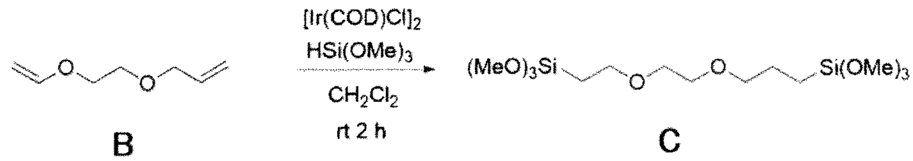


B C

Furthermore, at room temperature, the compound B (5.0 g, 1.0 eq.), 125 mL of superdehydrated dichloromethane, and 0.26 g of cyclooctadiene iridium chloride dimer ([Ir(COD)Cl]$_2$) were added in a 50-mL reaction vessel, to obtain an orange solution. To the orange solution, under stirring, trimethoxysilane (HSi(OMe)$_3$) (14.9 mL, 3.0 eq.) was slowly added dropwise over 15 minutes. After the solution was stirred at room temperature for 2 hours, the solution Y2 was added to the solution after stirring. With the distillation purification apparatus attached to the reacting vessel, the dichloromethane was removed at a bath temperature of 50 °C, and the volatile component was further removed under reduced pressure of 20 mmHg/70 °C. The residue was purified by distillation (degree of vacuum: 0.1 to 0.3 mmHg, oil bath temperature: 180 to 195 °C, vapor temperature: 139 to 142 °C), to obtain a light brown solution as the compound C (10.4 g, 27.9 mol, yield 59.6%).

[Examples]

The present disclosure will be more specifically described below with reference to Examples and Comparative Example. It is to be noted however that the present disclosure is not limited to the following Examples.

<Battery (A1-1)>

[Preparation of negative electrode active material]

Lithium carbonate ($Li_2CO_3$) and silicon dioxide ($SiO_2$) were mixed in a molar ratio of $Li_2CO_3$:$SiO_2$ = 34:66, and the mixture was dissolved by heating at 1500 °C for 5 hours in an inert gas atmosphere, to obtain a melt. The melt was passed between metal rolls, to form a solid in the form of flakes, and the solid was heat-treated at 750 °C for 5 hours, to obtain a lithium silicate composite oxide present as a mixed phase of amorphous and crystalline. The obtained lithium silicate composite oxide was pulverized to have an average particle diameter of 10 μm.

Next, in an inert gas atmosphere, Si particles (3N, average particle diameter 10 μm) and the lithium silicate composite oxide were mixed in a mass ratio of Si particles:lithium silicate composite oxide = 58:42, and packed in the pot (made of SUS (stainless steel), volume: 500 mL) of a ball mill (P-5, available from Fritsch Co., Ltd.). Then, 24 SUS balls (diameter 20 mm) were placed in the pot, and with the lid closed, pulverization was performed at 200 rpm for 50 hours, to obtain powder. Thereafter, the obtained powder was taken out in an inert gas atmosphere, and heat-treated at 800 °C for 4 hours in the inert gas atmosphere, to obtain a sintered body of a Si-containing lithium silicate composite oxide. That is, through the above processes, composite particles containing a lithium silicate phase and a silicon phase dispersed in the lithium silicate phase were produced.

Thereafter, the sintered body was pulverized, and passed through a 40-μm mesh. Then, the particles passed through the mesh were mixed with coal pitch (MCP250, available from JFE Chemical Co., Ltd.,) to obtain a mixture. Next, the mixture was heat-treated at 800 °C for 5 hours in an inert gas atmosphere, to coat the particle surfaces with a conductive carbon and thus form a conductive layer on the surfaces. The coated amount of the conductive layer was set to 5 mass% relative to the total mass of the Si-containing lithium silicate composite oxide particles and the conductive layer. Thereafter, using a sieve, active material particles having an average particle diameter of 5 μm and having a conductive layer were obtained. The active material particles and the conductive layer formed on the surfaces thereof may be hereinafter sometimes collectively referred to as "active material particles (a0)".

[Analysis of active material particles]

The cross section of the active material particles (a0) was observed with a TEM. The result found that the average particle diameter of the Si particles (Si phase) was less than 50 nm. A particle cross section of the active material particles (a0) was observed with a SEM. The result confirmed that many Si particles (Si phase) were dispersed almost uniformly in the silicate phase.

In the XRD pattern of the active material particles (a0), peaks derived from Si and $Li_2Si_2O_5$ were confirmed. No peak derived from $SiO_2$ was observed at or around 2θ = 25°. The result of Si-NMR analysis on the active material particles (a0) found that the content of $SiO_2$ was below the lower detection limit.

[Coat treatment 1-1 of negative electrode active material]

First, 342 mL of ethanol, 10 mL of pure water, and 326 μL of hydrochloric acid (concentration: 37 mass%) were mixed, to prepare a solution having a pH of about 4.5 (hereinafter sometimes referred to as a "base liquid"). To the base liquid, bis[3-(triethoxysilyl)propyl]tetrasulfide (commercial product, hereinafter sometimes referred to as "P1") was added at a concentration of 0.5 mass%, and mixed, to prepare a P1 solution. Next, 22 g of the active material particles (a0) were mixed with the P1 solution, to form a suspension, which was stirred at 50 °C for 24 hours using a stirrer. In this way, the P1 was allowed to react so as to form a siloxane bond.

Next, the suspension was subjected to suction filtration using a polytetrafluoroethylene (PTFE) membrane filter, and rinsed with 500 mL of ethanol and then with 500 mL of pure water. The collected particles were vacuum-dried at 100 °C for 24 hours, to obtain a negative electrode active material (a1-1). A cross section of this negative electrode active material (a1-1) was observed with a TEM-EDX instrument (JEM-F200, available from JEOL Ltd.). The result confirmed that a surface layer was formed on the Si-containing lithium silicate composite oxide particles. The result also confirmed that a conductive layer (conductive carbon layer) and a substance derived from P1 (including a reaction product of P1) impregnated into the conductive layer were present in the surface layer.

[Coat treatment 1-2 of negative electrode active material]

To 17 mL of pure water, 0.77% by mass of P1 was added and mixed, to prepare an aqueous P1 solution. The active material particles (a0) was mixed in an amount of 31 g with an aqueous solution of P1, to prepare a paste. Next, the paste was vacuum-dried at 100 °C for 24 hours. In this way, the P1 was allowed to react so as to form a siloxane bond, and thus, a negative electrode active material (a1-2) in the form of powder was obtained.

A cross section of the negative electrode active material (a1-2) was observed with a TEM-EDX instrument (JEM-F200, available from JEOL Ltd.). The result confirmed that a surface layer was formed on the Si-containing lithium silicate composite oxide particles. The result also confirmed that a conductive layer (conductive carbon layer) and a substance derived from P1 (including a reaction product of P 1) impregnated into the conductive layer were present in the surface layer.

[Coat treatment 2-1 of negative electrode active material]

First, 342 mL of ethanol, 10 mL of pure water, and 326 μL of hydrochloric acid (concentration: 37 mass%) were mixed, to prepare a solution having a pH of about 4.5 (hereinafter, "base liquid"). To the base liquid, the aforementioned compound C was added at a concentration of 0.5 mass%, and mixed, to prepare a compound C solution. Next, 22 g of the active material particles (a0) were mixed with the compound C solution, to form a suspension, which was stirred at 50 °C for 24 hours using a stirrer. Then, the suspension was subjected to suction filtration using a PTFE membrane filter, and rinsed with 500 mL of ethanol and then with 500 mL of pure water. The collected particles were vacuum-dried at 100 °C for 24 hours, to obtain a negative electrode active material (a2-1). A cross section of this negative electrode active material (a2-1) was observed with a TEM-EDX instrument (JEM-F200, available from JEOL Ltd.). The result confirmed that a surface layer was formed on the Si-containing lithium silicate composite oxide particles. The result also confirmed that a conductive layer (conductive carbon layer) and a substance derived from the compound C (including a reaction product of the compound C) impregnated into the conductive layer were present in the surface layer.

[Coat treatment 2-2 of negative electrode active material]

To 17 mL of pure water, 0.6% by mass of the compound C was added and mixed, to prepare an aqueous compound C solution. The active material particles (a0) was mixed in an amount of 31 g with the aqueous compound C solution, to obtain a paste. Next, the paste was vacuum-dried at 100 °C for 24 hours, to obtain a negative electrode active material (a2-2) in the form of powder. A cross section of this negative electrode active material (a2-2) was observed with a TEM-EDX instrument (JEM-F200, available from JEOL Ltd.). The result confirmed that a surface layer was formed on the Si-containing lithium silicate composite oxide particles. The result also confirmed that a conductive layer (conductive carbon layer) and a substance derived from the compound C (including a reaction product of the compound C) impregnated into the conductive layer were present in the surface layer.

[Production of negative electrode]

An active material mixture containing the negative electrode active material (a1-1) and graphite in a mass ratio of negative electrode active material (a1-1):graphite = 5:95 was mixed with a sodium salt of carboxymethyl cellulose (CMC-Na), and styrene-butadiene rubber (SBR) in a mass ratio of active material mixture:CMC-Na: SBR = 97.5:1.0:1.5,

and water was added thereto, to obtain a mixture. The mixture was stirred in a mixer (T.K. HIVIS MIX, available from PRIMIX Corporation), to prepare a negative electrode slurry. Next, the negative electrode slurry was applied onto both surfaces of copper foil (negative electrode current collector). The applied films were dried, then rolled, and thus, a negative electrode in which a negative electrode mixture layer having a density of 1.6 g/$cm^3$ was formed on each of both surfaces of the copper foil was obtained.

[Production of positive electrode]

Lithium cobaltate, acetylene black (HS100, available from Denki Kagaku Kogyo Co., Ltd.), and polyvinylidene fluoride (PVdF) were mixed in a mass ratio of lithium cobaltate:acetylene black:PVdF = 98.7:0.7:0.6. To the mixture, N-methyl-2-pyrrolidone (NMP) was added as a dispersion medium, which was then mixed in a mixer (T.K. HIVIS MIX, available from PRIMIX Corporation), to prepare a positive electrode slurry. Next, the positive electrode slurry was applied onto both surfaces of aluminum foil (positive electrode current collector). The applied films were dried, then rolled, and thus, a positive electrode in which a positive electrode mixture layer having a density of 3.6 g/$cm^3$ was formed on each of both surfaces of the aluminum foil was obtained.

[Preparation of nonaqueous liquid electrolyte]

In a mixed solvent obtained by mixing ethylene carbonate (EC), ethyl methyl carbonate (EMC), and dimethyl carbonate (DMC) in a volume ratio of EC:EMC:DMC = 4:1:15, lithium hexafluorophosphate ($LiPF_6$) was added at concentration of 1.3 mol/L, to prepare a nonaqueous liquid electrolyte.

[Production of nonaqueous electrolyte secondary battery]

A tab was attached to each of the electrodes. Next, the positive electrode, the negative electrode, and the separator were spirally wound, with the separator disposed between the positive electrode and the negative electrode, thereby to produce a wound electrode group. At this time, the electrode plates were wound, with the tabs positioned at the outermost layer. The obtained electrode plate group was inserted into an outer body constituted of an aluminum laminate sheet of 62 mm in height and 35 mm in width, and vacuum-dried at 105 °C for 2 hours. Next, the above nonaqueous liquid electrolyte was injected into the outer body, and the opening of the outer body was sealed. Thus, a battery (A1-1), which was a nonaqueous electrolyte secondary battery, was produced. The design capacity of this battery was 360 mAh.

<Battery (A1-2)>

A battery (A1-2) was produced under the same conditions as those for the battery (A1-1), except that the negative electrode active material (a1-2) was used instead of the negative electrode active material (a1-1).

<Battery (A2-1)>

A battery (A2-1) was produced under the same conditions as those for the battery (A1-1), except that the negative electrode active material (a2-1) was used instead of the negative electrode active material (a1-1).

<Battery (A2-2)>

A battery (A2-2) was produced under the same conditions as those for the battery (A1-1), except that the negative electrode active material (a2-2) was used instead of the negative electrode active material (a1-1).

<Battery B>

A battery B of Comparative Example was produced under the same conditions as those for the battery (A1-1), except that the active material particles (a0) were used instead of the negative electrode active material (a1-1).

(Charge-discharge cycle characteristics)

With respect to the above nonaqueous electrolyte secondary batteries, a total of 400 charge-discharge cycles were performed at a temperature of 25 °C. The charge-discharge cycles were performed by repeating a set of charge-discharge cycles consisted of 100 charge-discharge cycles, four times in total. One set of charge-discharge cycles was

performed by performing one charge-discharge cycle under the following charge-discharge condition 1, and one charge-discharge cycle under the following charge-discharge condition 2, then followed by 98 charge-discharge cycles under the following charge-discharge condition 3.

[Charge-discharge condition 1]

A constant-current charging was performed at a constant current of 0.3C (1C is a current value at which the design capacity can be discharged in one hour) until the battery voltage reached 4.2 V, and a constant-voltage charging was performed at a constant voltage of 4.2 V until the current value reached 0.02C. After a rest for 20 minutes, a constant-current discharging was performed at a constant current of 0.05C until the battery voltage reached 2.5 V, followed by a rest for 20 minutes.

[Charge-discharge condition 2]

A constant-current charging was performed at a constant current of 0.05C until the battery voltage reached 4.2 V, and a constant-voltage charging was performed at a constant voltage of 4.2 V until the current value reached 0.02C. After a rest for 20 minutes, a constant-current discharging was performed at a constant current of 0.05C until the battery voltage reached 2.5 V, followed by a rest for 20 minutes. Subsequently, a constant-current discharging was performed at a constant current of 0.2C until the battery voltage reached 2.5 V, followed by a rest for 20 minutes.

[Charge-discharge condition 3]

A constant-current charging was performed at a constant current of 0.5C until the battery voltage reached 4.2 V, and a constant-voltage charging was performed at a constant voltage of 4.2 V until the current value reached 0.05C. After a rest for 20 minutes, a constant-current discharging was performed at a constant current of 0.7C until the battery voltage reached 2.5 V, followed by a rest for 20 minutes.

[Capacity retention rate after 400 cycles]

The discharge capacity at the 3rd cycle and the discharge capacity at the 400th cycle under the above charge-discharge conditions were measured, to determine a capacity retention rate after 400 cycles from the following equation. The results are shown in Table 1.

$$\text{Capacity retention rate after 400 cycles (\%)} = (\text{discharge capacity at 400th cycle} / \text{discharge capacity at 3rd cycle}) \times 100$$

[Table 1]

| nonaqueous electrolyte secondary battery | capacity retention rate after 400 cycles (%) |
|---|---|
| A1-1 | 73.7 |
| A1-2 | 71.3 |
| A2-1 | 75.2 |
| A2-2 | 71.4 |
| B | 63.0 |

The battery B is a battery of Comparative Example, and the others are batteries according to the present disclosure. The batteries A1-1 to A2-2 according to the present disclosure suppressed the decrease in the capacity retention rate associated with charge-discharge cycles, as compared to the battery B of Comparative Example. In the batteries A1-1 to A2-2, the surfaces of the negative electrode active materials (a1-1) to (a2-2) were protected with a reaction product of the compound (1). Presumably because of this, the reaction (side reaction) between Si and the liquid electrolyte was suppressed, and the decrease in the capacity retention rate was suppressed.

[Industrial Applicability]

The present disclosure is applicable to a negative electrode active material for a nonaqueous electrolyte secondary battery, and a nonaqueous electrolyte secondary battery including the negative electrode active material.

Although the present invention has been described in terms of the presently preferred embodiments, it is to be understood that such disclosure is not to be interpreted as limiting. Various alterations and modifications will no doubt become apparent to those skilled in the art to which the present invention pertains, after having read the above disclosure. Accordingly, it is intended that the appended claims be interpreted as covering all alterations and modifications as fall within the true spirit and scope of the invention.

[Reference Signs List]

1a: positive electrode mixture layer, 1b: positive electrode current collector, 1c: positive electrode tab lead, 2a: negative electrode mixture layer, 2b: negative electrode current collector, 2c: negative electrode tab lead, 4: electrode plate group, 5: outer case, 6 : insulating tab film, 10: positive electrode, 20: negative electrode, 30: separator, 100: nonaqueous electrolyte secondary battery

## Claims

1. A negative electrode active material for a nonaqueous electrolyte secondary battery, comprising:

   active material particles containing silicon; and
   a surface layer formed on surfaces of the active material particles, wherein
   the surface layer contains a reaction product of a compound allowed to react so as to form a siloxane bond,
   the compound includes a structure represented by Si-R1-Si,
   the R1 is an atomic group having a chain portion including, as constituent elements, an alkylene group and at least one selected from the group consisting of a sulfur atom, an oxygen atom, and a nitrogen atom,
   one of the two Si's is bound with at least one atomic group selected from the group consisting of an alkoxy group having 1 to 6 carbon atoms, a group including an oxyalkylene group and represented by $-O-(C_{x1}H_{2x1+1}O_{y1})$ where x1 is an integer of 2 to 6, and y1 is an integer of 1 to 3, a chloro group, and a hydroxyl group, and
   the other one of the two Si's is bound with at least one atomic group selected from the group consisting of an alkoxy group having 1 to 6 carbon atoms, a group including an oxyalkylene group and represented by $-O-(C_{x2}H_{2x2+1}O_{y2})$ where x2 is an integer of 2 to 6, and y2 is an integer of 1 to 3, a chloro group, and a hydroxyl group.

2. The negative electrode active material according to claim 1, wherein the compound is a compound represented by the following formula (1):

   [Chem. 1]

   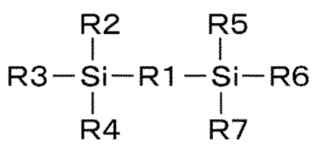
   (1)

   ,

   wherein in the formula (1), at least one selected from the group consisting of R2, R3, and R4 is each independently an alkoxy group having 1 to 6 carbon atoms, a group including an oxyalkylene group and represented by $-O-(C_{x1}H_{2x1+1}O_{y1})$ where x1 is an integer of 2 to 6, and y1 is an integer of 1 to 3, a chloro group, or a hydroxyl group; at least one selected from the group consisting of R5, R6, and R7 is each independently an alkoxy group having 1 to 6 carbon atoms, a group including an oxyalkylene group and represented by $-O-(C_{x2}H_{2x2+1}O_{y2})$ where x2 is an integer of 2 to 6, and y2 is an integer of 1 to 3, a chloro group, or a hydroxyl group; the rest of R2 to R7 are each independently a hydrocarbon group having 1 to 6 carbon atoms, a hydrogen atom, or a group represented by $C_{x3}H_{2x3+y3+1}N_{y3}O_{z3}S_{w3}$ where x3 is an integer of 1 to 6, and y3 is an integer of 0 to 3, z3 is an integer of 0 to 3, w3 is an integer of 0 to 3, and $1 \leq y3 + z3 + w3$; and R2 to R7 may be the same or different.

3. The negative electrode active material according to claim 2, wherein in the formula (1), R2 to R7 are a methoxy

group or an ethoxy group.

**4.** The negative electrode active material according to any one of claims 1 to 3, wherein

the R1 includes at least one heteroatom selected from the group consisting of a sulfur atom, an oxygen atom, and a nitrogen atom, and two alkylene groups constituting the chain portion so as to sandwich the at least one heteroatom, and
the two alkylene groups each independently have 2 to 4 carbon atoms.

**5.** The negative electrode active material according to any one of claims 1 to 3, wherein the R1 is any one of $-(CH_2)_pS_n(CH_2)_q-$ ($1 \le n \le 6$, $2 \le p \le 4$, and $2 \le q \le 4$), $-(CH_2)_pO(CH_2)_q-$ ($2 \le p \le 4$ and $2 \le q \le 4$), $-(CH_2)_pO(CH_2)_rO(CH_2)_q-$ ($2 \le p \le 4$, $2 \le q \le 4$, and $2 \le r \le 4$), and $-(CH_2)_pNH(CH_2)_q-$ ($2 \le p \le 4$ and $2 \le q \le 4$), where n, p, q, and r are each a natural number.

**6.** The negative electrode active material according to any one of claims 1 to 5, wherein the surface layer contains a conductive carbon.

**7.** The negative electrode active material according to any one of claims 1 to 6, wherein the active material particles are composite particles containing a lithium silicate phase represented by $Li_xSiO_y$ where $0 < x \le 4$ and $0 < y \le 4$, and a silicon phase dispersed in the lithium silicate phase.

**8.** The negative electrode active material according to claim 7, wherein the silicon phase has a crystallite size in the range of 1 nm to 1000 nm.

**9.** The negative electrode active material according to any one of claims 1 to 6, wherein the active material particles contain a carbon phase, and a silicon phase dispersed in the carbon phase.

**10.** A nonaqueous electrolyte secondary battery, comprising:

a positive electrode; a negative electrode; and a nonaqueous electrolyte, wherein
the negative electrode includes the negative electrode active material according to any one of claims 1 to 9.

**11.** A production method of a negative electrode active material for a nonaqueous electrolyte secondary battery, the production method comprising:

a first step of bringing a compound or a liquid in which the compound is dissolved, into contact with active material particles containing silicon; and
a second step of allowing the compound to react so as to form a siloxane bond, while the compound or the liquid are in contact with the active material particles; wherein
the compound includes a structure represented by Si-R1-Si,
the R1 is an atomic group having a chain portion including, as constituent elements, an alkylene group and at least one selected from the group consisting of a sulfur atom, an oxygen atom, and a nitrogen atom,
one of the two Si's is bound with at least one atomic group selected from the group consisting of an alkoxy group having 1 to 6 carbon atoms, a group including an oxyalkylene group and represented by $-O-(C_{x1}H_{2x1+1}O_{y1})$ where x1 is an integer of 2 to 6, and y1 is an integer of 1 to 3, a chloro group, and a hydroxyl group, and
the other one of the two Si's is bound with at least one atomic group selected from the group consisting of an alkoxy group having 1 to 6 carbon atoms, a group including an oxyalkylene group and represented by $-O-(C_{x2}H_{2x2+1}O_{y2})$ where x2 is an integer of 2 to 6, and y2 is an integer of 1 to 3, a chloro group, and a hydroxyl group.

**12.** The production method according to claim 11, wherein the compound is a compound represented by the following formula (1):

[Chem. 2]

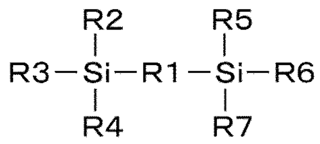

(1)

,

wherein in the formula (1), at least one selected from the group consisting of R2, R3, and R4 is each independently an alkoxy group having 1 to 6 carbon atoms, a group including an oxyalkylene group and represented by $-O-(C_{x1}H_{2x1+1}O_{y1})$ where x1 is an integer of 2 to 6, and y1 is an integer of 1 to 3, a chloro group, or a hydroxyl group; at least one selected from the group consisting of R5, R6, and R7 is each independently an alkoxy group having 1 to 6 carbon atoms, a group including an oxyalkylene group and represented by $-O-(C_{x2}H_{2x2+1}O_{y2})$ where x2 is an integer of 2 to 6, and y2 is an integer of 1 to 3, a chloro group, or a hydroxyl group; the rest of R2 to R7 are each independently a hydrocarbon group having 1 to 6 carbon atoms, a hydrogen atom, or a group represented by $C_{x3}H_{2x3+y3+1}N_{y3}O_{z3}S_{w3}$ where x3 is an integer of 1 to 6, and y3 is an integer of 0 to 3, z3 is an integer of 0 to 3, w3 is an integer of 0 to 3, and $1 \leq y3 + z3 + w3$; and R2 to R7 may be the same or different.

FIG. 1

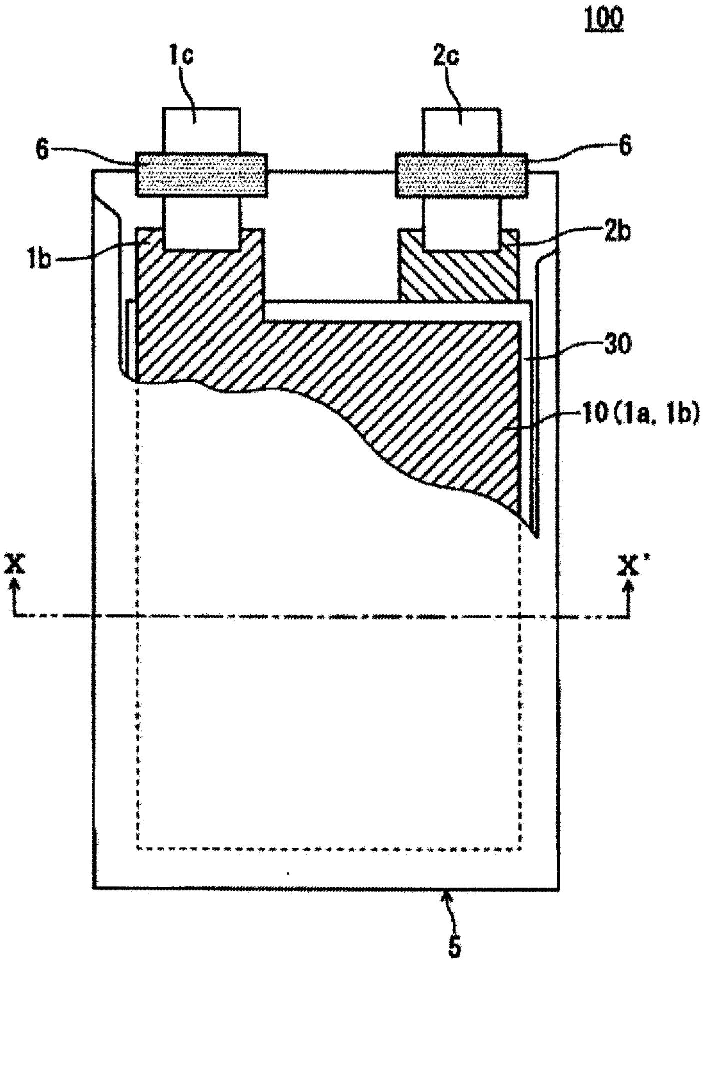

*FIG. 2*

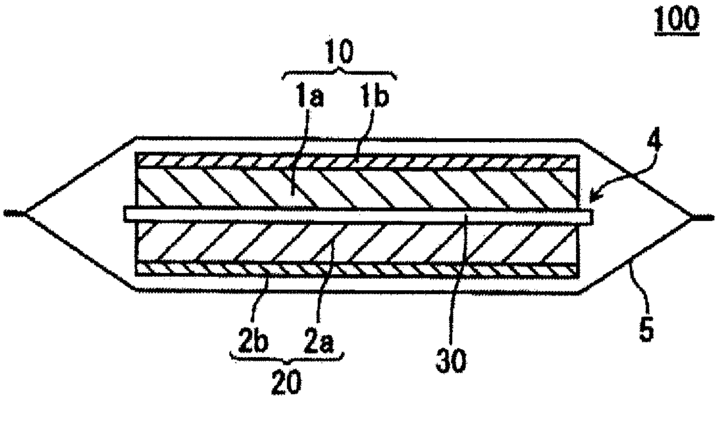

**INTERNATIONAL SEARCH REPORT**

International application No.
**PCT/JP2022/019359**

**A. CLASSIFICATION OF SUBJECT MATTER**

***C01B 33/32***(2006.01)i; ***C07F 7/18***(2006.01)i; ***H01M 4/36***(2006.01)i; ***H01M 4/38***(2006.01)i; ***H01M 4/58***(2010.01)i; ***H01M 4/587***(2010.01)i
FI: H01M4/38 Z; H01M4/36 C; H01M4/58; H01M4/587; H01M4/36 E; C01B33/32; C07F7/18 W

According to International Patent Classification (IPC) or to both national classification and IPC

**B. FIELDS SEARCHED**

Minimum documentation searched (classification system followed by classification symbols)

C01B33/32; C07F7/18; H01M4/36; H01M4/38; H01M4/58; H01M4/587

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| A | JP 2015-050188 A (DONGGUAN AMPEREX TECHNOLOGY LTD.) 16 March 2015 (2015-03-16)<br>entire text, all drawings | 1-12 |
| A | WO 2011/013851 A1 (DOW CORNING TORAY CO., LTD.) 03 February 2011 (2011-02-03)<br>entire text, all drawings | 1-12 |
| A | JP 2020-138895 A (JNC CORP.) 03 September 2020 (2020-09-03)<br>entire text, all drawings | 1-12 |

☐ Further documents are listed in the continuation of Box C. ☑ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **15 July 2022** | **26 July 2022** |
| Name and mailing address of the ISA/JP<br>**Japan Patent Office (ISA/JP)**<br>**3-4-3 Kasumigaseki, Chiyoda-ku, Tokyo 100-8915**<br>**Japan** | Authorized officer<br><br>Telephone No. |

Form PCT/ISA/210 (second sheet) (January 2015)

**INTERNATIONAL SEARCH REPORT**
**Information on patent family members**

International application No.
**PCT/JP2022/019359**

| Patent document cited in search report | Publication date (day/month/year) | Patent family member(s) | Publication date (day/month/year) |
|---|---|---|---|
| JP 2015-050188 A | 16 March 2015 | US 2015/0064552 A1<br>all<br>CN 103456928 A | |
| WO 2011/013851 A1 | 03 February 2011 | US 2012/0121981 A1<br>all<br>EP 2461397 A1<br>CN 102473908 A<br>KR 10-2012-0055565 A | |
| JP 2020-138895 A | 03 September 2020 | US 2020/0280057 A1<br>all<br>CN 111640917 A | |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2003160328 A
- JP 2014150068 A


### Non-patent literature cited in the description


- *Ionics,* 2018, vol. 24, 3691-3698